# EUROPEAN PATENT SPECIFICATION

(11) **EP 1 251 476 B1**
(45) Date of publication and mention of the grant of the patent: **30.06.2004**
(21) Application number: 02008314.3
(22) Date of filing: 11.04.2002
(51) Int. Cl.: G08G 1/127, G08G 1/09

(54) **Information providing system and privacy protection method**
System zur Bereitstellung von Informationen und Verfahren zum Schutz der Identität
Systeme pour fournir des Informations et méthode pour proteger l'identité

(30) Priority: 11.04.2001 JP 2001112083
(43) Date of publication of application: 23.10.2002
(73) Proprietor: NEC CORPORATION, Tokyo (JP)
(72) Inventor: Ichimura, Shigehiro, Minato-ku, Tokyo (JP)
(74) Representative: Betten & Resch

(56) References cited:
- EP-A- 0 516 215
- EP-A- 0 992 962
- WO-A-00/54240
- WO-A-98/54682
- PATENT ABSTRACTS OF JAPAN vol. 2002, no. 06, 4 June 2002 (2002-06-04) & JP 2002 048561 A (INSTITUTE FOR WELCOME SYSTEM LTD), 15 February 2002 (2002-02-15)

## Description

The present invention relates to an information providing system and in particular to an information providing system using position information of a user to provide position-related information to the user and a privacy protection method therefor.

With the widespread use of mobile communication terminals, attention is being given to an information providing system, which allows a user to obtain position-related information such as traffic information in response to a user's request. For example, when a user having a navigation device in a car desires traffic information around the position of the user, the user operates the navigation device to send a traffic information request to an information providing server. When receiving such a request, the server searches a traffic information database and sends desired traffic information back to the user's navigation device.

In general, the traffic information request includes a user ID uniquely assigned to the user. Accordingly, when the user ID is received, it can be easily identified who requests the information.

To protect the user's privacy, Japanese Patent Application Unexamined Publication No. 11-340895 discloses a traffic information collecting system allowing anonymous traffic information to be collected from navigation devices.
A navigation device is provided with a mode designation means, by which traffic information can be sent in an anonymous mode, that is, without attaching its user ID. In the traffic information collecting system, when having received the traffic information having no user ID, it is attached with a unique ID and is then registered on the traffic information database.

However, even though the user ID is not sent, there is a possibility that the user's privacy is not assured. More specifically, the request or message from the user includes the position information of the user. Accordingly, if this position information is revealed, it is possible to identify the user that has sent the request by searching users located at the position.

EP-0992962 discloses a traffic information service method wherein traffic information around a current car is provided. The traffic information servicing method including a car navigation device connected to an information center for providing traffic information according to received traffic information, a radio telephone, and an adaptor for controlling a radio telephone, for transmitting car information and traffic information to the information center and receiving the car information and the traffic information from the traffic information center, includes the steps of transmitting the location of a car and information on the car from a car navigation device to the traffic information center, analyzing the location and traveling direction of a car by the location of the car and the information on the car, received from the traffic information center, determining the number and order of areas in predetermined units corresponding thereto, and transmitting traffic information in the areas to the car navigation device according to the number and order of the determined areas.

An object of the present invention is to provide an information providing system and privacy protection method allowing enhanced privacy protection.

The present invention is defined in the independent claims . The dependent claims define particular embodiments of the invention.

According to an embodiment of the present invention, the position indication of a mobile user terminal is modified before sent to a server.

According to an embodiment of the present invention, an information providing system for providing position-related information from an information providing server to a mobile user terminal through a network to which a plurality of mobile user terminals are connected, wherein the position-related information relates to a position of the mobile user terminal, includes: a position modifier for modifying the indication of a position of the user terminal to produce a modified position indication, wherein the modified position indication is transmitted as a position indication of the mobile user terminal to the information providing server.

According to an embodiment of the present invention, the user terminal includes the position modifier. The mobile user terminal further includes: a position detector for detecting the position of the user terminal; and a transmitter for transmitting a request having the modified position indication as a source position to the information providing server, wherein the information providing server transmits the position-related information to the mobile user terminal in response to the request from the mobile user terminal.

According to another embodiment of the present invention, the system further includes an intervening device connected to the network, for intervening in communication from the mobile user terminal to the information providing server, wherein the intervening device comprises the position modifier. More specifically, the user terminal includes: the position detector; and a first transmitter for transmitting a first request having the position to the intervening device through the network. The intervening device includes: a receiver for receiving the first request from the mobile user terminal; the position modifier for modifying the position indication of the mobile user terminal included in the first request to produce the modified position indication; and a second transmitter for transmitting a second request having the modified position indication as a source position to the information providing server, wherein the information providing server transmits the position-related information to the mobile user terminal in response to the second request received from the intervening device.

The modified position indication may be set to an arbitrary position within a predetermined radius of the position of the mobile user terminal. The modified position indication may be set to an arbitrary position at a predetermined distance away from the position of the user terminal.

In the case where position of the user terminal is represented by at least two values, the modified position indication may be represented by reducing the number of significant figures of each of said at least two values. Preferably, the modified position indication is set to an arbitrary position within a radius of the position of the mobile user terminal, wherein the radius is set to a distance from the position of the user terminal to that of a selected other mobile user terminal.

The intervening device may further include: a table for storing position information of the plurality of mobile user terminals, wherein the position modifier modifies the position indication of the user terminal by searching the table to select one of positions of the plurality of user terminals.

As described above, according to an embodiment of the present invention, the position indication of a mobile user terminal that accesses a server is modified by the mobile user terminal itself or an intervening device in the network. The modified position indication is notified to the server. Accordingly, a possibility that the mobile user terminal is identified from position information is substantially lowered, resulting in further enhanced privacy protection.
Fig. 1 is a block diagram showing an information providing system according to a first embodiment of the present invention;
Fig. 2 is a flow chart showing an operation of the information providing system as shown in Fig. 1;
Fig. 3 is a diagram showing a format of a position-related information request used in the information providing system as shown in Fig. 1;
Fig. 4 is a block diagram showing an information providing system according to a second embodiment of the present invention;
Fig. 5 is a flow chart showing an operation of the information providing system as shown in Fig. 4;
Fig. 6A is a diagram showing a format of a position-related information request used in the information providing system as shown in Fig. 4;
Fig. 6B is a diagram showing a format of a modified-position-related information request used in the information providing system as shown in Fig. 4;
Fig. 7 is a block diagram showing a privacy protection intervening device in an information providing system according to a third embodiment of the present invention;
Fig. 8 is a diagram showing an example of a position management table in the privacy protection intervening device as shown in Fig. 7;
Fig. 9 is a flow chart showing an operation of the privacy protection intervening device as shown in Fig. 7;
Fig. 10 is a schematic diagram showing an example of user position distribution; and
Fig. 11 is a diagram showing an example of the position management table in the case of the user position distribution as shown in Fig. 10.

### First embodiment

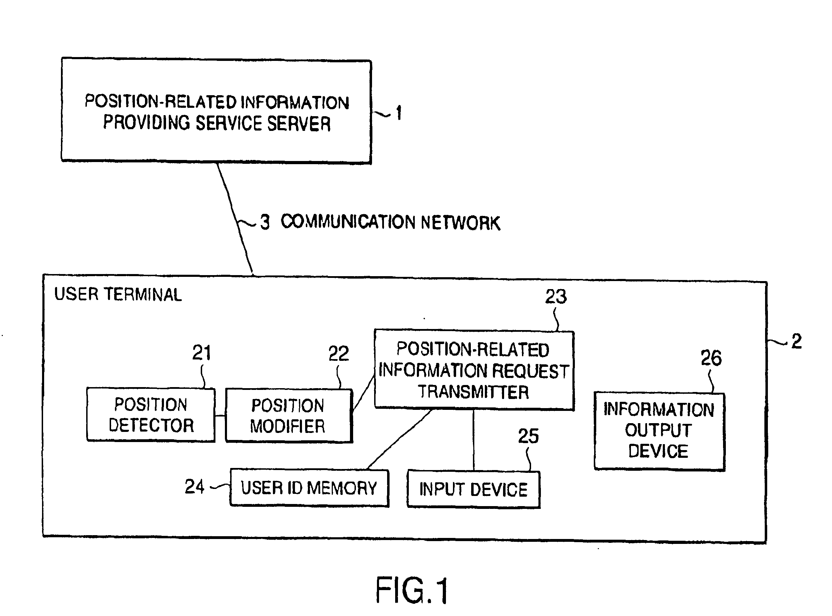

Referring to Fig. 1, an information providing system according to a first embodiment of the present invention is composed of a position-related information providing service server 1, a plurality of user terminals (here, one user terminal 2 is shown), and a communication network 3. The position-related information providing service server 1 and the user terminal 2 are connected to each other through the communication network 3.

The user terminal 2 is a mobile terminal such as a mobile telephone, a PHS (Personal Handy phone System) terminal, or another kind of wireless communication terminal. The communication network 3 allows communications between the position-related information providing service server 1 and the user terminal 2, such as public telephone switched network, PHS network, mobile telephone network, wireless LAN (Local Area Network), infrared communication network, optical communication network, or a combination thereof.

The position-related information providing service server 1 has a receiving function of receiving a position-related information request from the user terminal 2 through the communication network 3, a searching function for searching for position-related information such as traffic information based on the received position information, and a transmitting function of transmitting the found position-related information to the user terminal 2 that is a source of the request.

The user terminal 2 includes a position detector 21, a position modifier 22, a position-related information request transmitter 23, a user ID memory 24, an input device 25, and an information output device 26.

The position detector 21 detects the position of the user terminal 2, that is, its user. The position can be detected by GPS (Global Positioning System). Alternatively, a mobile communication system may be used to detect the position. For example, base station information received from a nearest base station can be used to determine the position of the user terminal 2 (see Japanese Patent Application Unexamined Publication No. 5-72314). In the case of using the GPS system, the position detector 21 receives GPS signals to produce position information, which may be represented by East Longitude and North Latitude, for example, 135 degrees, 20 minutes, 40 seconds east longitude (Long. 135°20'40"E) and 35 degrees, 30 minutes, 21 seconds north latitude (Lat. 35°30'21"N).

The position modifier 22 inputs the position information detected by the position detector 21 and modifies it to output modified position information to the position-related information request transmitter 23. The position modification will be described later.

The position-related information request transmitter 23 inputs the modified position information from the position modifier 22, user identification (ID) from the user ID memory 24, and a request condition from the input device 25, and uses these information to produce a position-related information request. The position-related information request is transmitted to the position-related information providing service server 1 via the communication network 3.

The input device 25 is used by the user to enter a request condition, data and various instructions. Specifically, the input device 25 may be a keypad or a touch-sensitive panel. The information output device 26 is used to provide the user with necessary information including the position-related information such as traffic information, which was received from the server 1 via the network 3. The information output device 26 may be a display such as CRT or LCD, a printer, and/or a speaker.

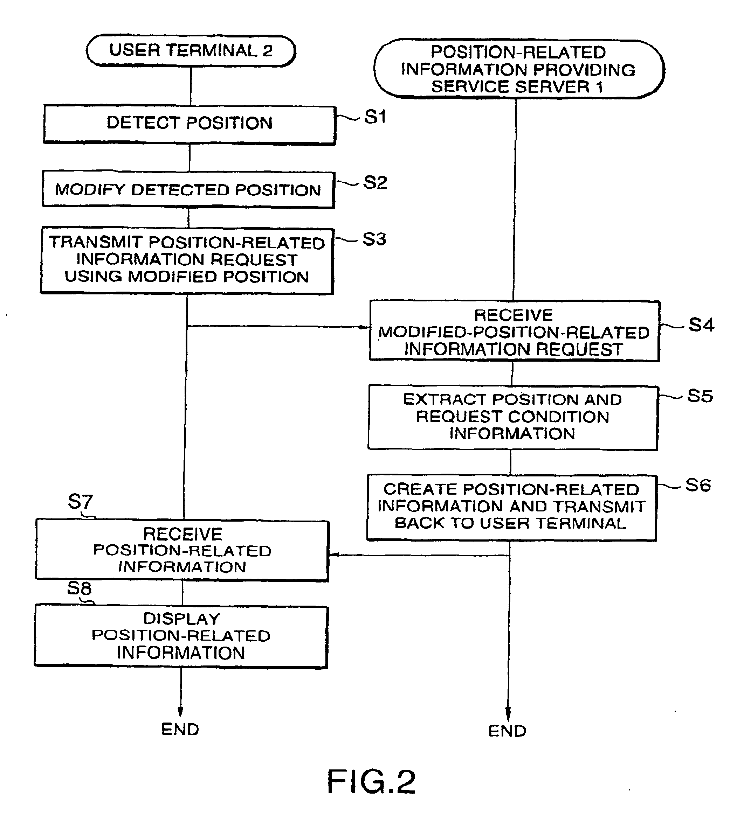

Next, an operation of the information providing system as shown in Fig. 1 will be described with reference to Fig. 2.

When a user #1 wants to obtain information related to the present position of the user #1 from the position-related information providing service server 1, the user #1 uses the input device 25 to enter a request condition indicating what kind of information is desired. The input request condition is output to the position-related information request transmitter 23.

Referring to Fig. 2, the position detector 21 detects the position of the user terminal 2 of the user #1 (step S1) and outputs position information (e.g. Long. 135°20'40"E and Lat. 35°30'21"N) to the position modifier 22.

The position modifier 22 modifies the position information (step S2). For example, the position is modified to an arbitrary position at a predetermined distance away from the detected position of the user terminal 2 or within a predetermined radius of the detected position. In the case of the position information being Long.135°20'40"E and Lat.35°30'21"N, for example, it may be changed to a position at a one-second distance from that detected position. Accordingly, the modified position is represented by Long.135°20'41"E and Lat.35°30'22"N.

Alternatively, it is possible to modify the detected position by reducing the number of significant figures. In the case of the position information being Long.135°20'40"E and Lat.35°30'21"N, for example, it may be changed to a position represented by Long.135°20'E and Lat.35°30'N.

In this manner, an amount of position modification is restricted within a predetermined distance to avoid increasing markedly in distance between the modified and actual positions. Such a different position from the actual position of the user #1 is sent to the server 1. Accordingly, the user's privacy can be effectively protected while maintaining useful position-related information for the user #1.

The position-related information request transmitter 23 uses the modified position information, the user identification (ID), and the request condition to produce a position-related information request and transmit it to the position-related information providing service server 1 via the communication network 3 (step S3).

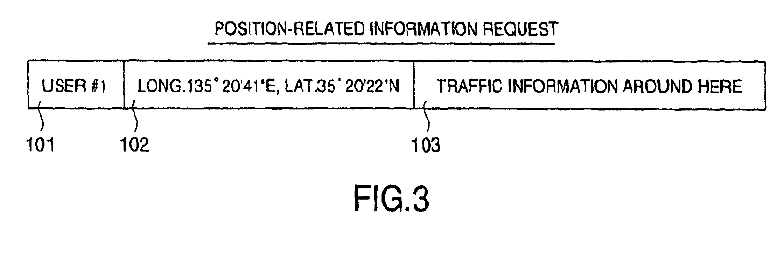

The position-related information request has a format, as shown in Fig. 3, including a user identification section 101, a position information section 102, and a request condition section 103. In this example, the user identification section 101 stores the user ID of the user #1, the position information section 102 stores the modified position information of Long.135°20'41"E and Lat.35°30'22"N, and the request condition section 103 stores a condition indicative of requesting traffic information around here.

When having received the position-related information request from the user terminal 2 through the communication network 3 (step S4), the position-related information providing service server 1 extracts the position information (here, "Long.135°20'41"E and Lat.35°30'22"N") and the request condition (here, " traffic information around here") from the received request (step S5). The position-related information providing service server 1 uses the position information and the request condition to create position-related information and send it back to the user terminal 2 (step S6).

When having received the position-related information from the server 1 (step S7), the user terminal 2 displays the received information through the information output device 26 to present it to the user #1 (step 58).

The above operation of the user terminal 2 as shown in Fig. 2 may be realized by software running on a program-controlled processor. More specifically, the user terminal 2 is provided with a central processing unit (CPU), on which a control program runs to implement the position modifier 22, the position-related information request transmitter 23, the user ID memory 24, the input device 25, and the information output device 26.

### Second embodiment

According to a second embodiment of the present invention, position modification that is performed within the user terminal 2 in the first embodiment is performed in a privacy protection intervening device 4 which is connected to the communication network 3. Accordingly, there is no need of providing the user terminal 2 with a position modifying function implemented by the position modifier 22, resulting in simplified circuit and reduced cost of the user terminal 2. In other words, there is no need of modifying the circuit of the user terminal 2. Hereinafter, circuit blocks similar to those previously described with reference to Fig. 1 are denoted by the same reference numerals and the details will be omitted.

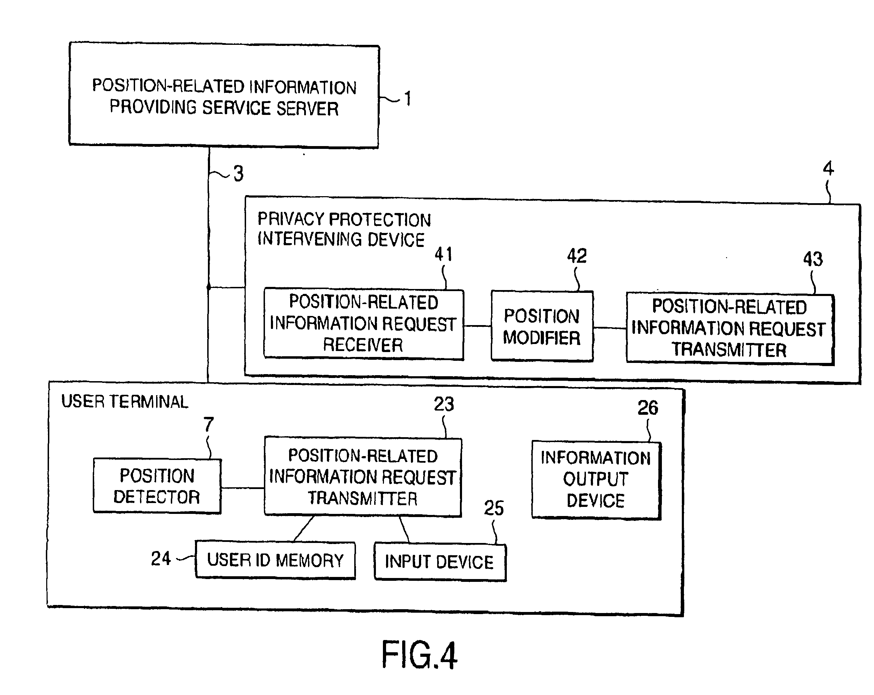

Referring to Fig. 4, an information providing system according to the second embodiment of the present invention is composed of the position-related information providing service server 1, a plurality of user terminals (here, one user terminal 2 is shown), the communication network 3 and the privacy protection intervening device 4 which is connected to the communication network 3.

As described above, the user terminal 2 does not have the position modifier 22. Accordingly, the position-related information request transmitter 23 inputs the detected position information from the position detector 21, user identification (ID) from the user ID memory 24, and a request condition from the input device 25, and uses these information to produce a position-related information request, which is transmitted to the privacy protection intervening device 4 via the communication network 3.

The privacy protection intervening device 4 is provided with a position-related information request receiver 41, a position modifier 42, and a position-related information request transmitter 43. The position-related information request receiver 41 receives the position-related information request from the user terminal 2. The position modifier 42 modifies the position information included in the received position-related information request and outputs a modified-position-related information request including the modified position information to the position-related information request transmitter 43. The position-related information request transmitter 13 transmits the modified-position-related information request to the position-related information providing service server 1 via the communication network 3.

The position-related information providing service server 1 receives a position-related information request from the privacy protection intervening device 4 through the communication network 3 and sends position-related information such as traffic information back to the user terminal 2 that is a source of the request.

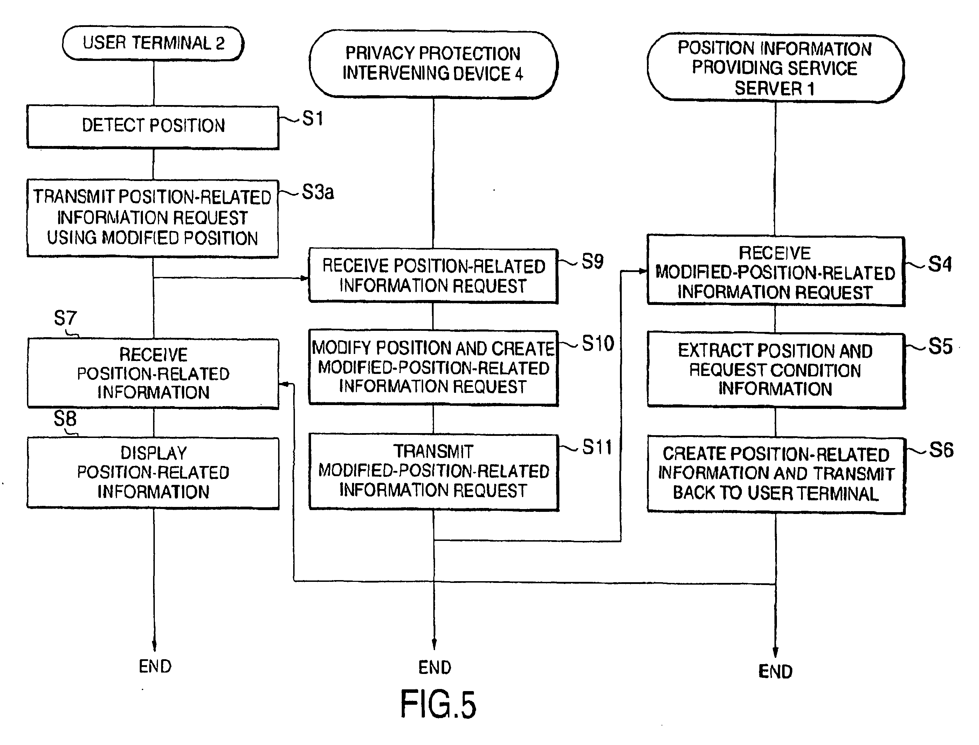

Next, an operation of the information providing system as shown in Fig. 4 will be described with reference to Fig. 5. In Fig. 5, steps similar to those previously described with reference to Fig. 2 are denoted by the same reference numerals and the details will be omitted.

When a user #2 wants to obtain information related to the present position of the user #2 from the position-related information providing service server 1, the user #2 uses the input device 25 to enter a request condition indicating what kind of information is desired. The input request condition is output to the position-related information request transmitter 23.

Referring to Fig. 5, it is assumed that the position detector 21 detects the position of the user terminal 2 of the user #2 (step S1) and outputs position information (e.g. Long. 135°20'40"E and Lat. 35°30'21"N) to the position-related information request transmitter 23.

The position-related information request transmitter 23 uses the detected position information, the user identification (ID), and the request condition to produce a position-related information request and transmit it to the privacy protection intervening device 4 via the communication network 3 (step S3a).

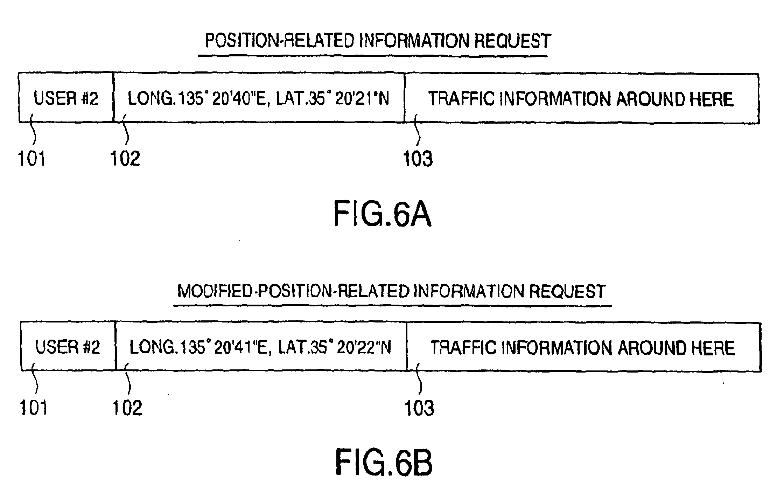

The position-related information request transmitted from the user terminal 2 has a format, as shown in Fig. 6A, which is the same as that of Fig. 3. In this example, the user identification section 101 stores the user ID of the user #2, the position information section 102 stores the detected position information of Long.135°20'40"E and Lat.35°30'21"N, and the request condition section 103 stores a condition indicative of requesting traffic information around here.

In the privacy protection intervening device 4, the position-related information request receiver 41 receives the position-related information request from the user terminal 2 (step S9). The position modifier 42 modifies the position information included in the received position-related information request to produce a modified-position-related information request including the modified position information (step S10). In the case of the received position information being Long.135°20'40"E and Lat.35°30'21"N, for example, it may be changed to a position at a one-second distance from that detected position. Accordingly, the modified position is represented by Long.135°20'41"E and Lat.35°30'22"N.

The position-related information request transmitter 43 inputs the modified-position-related information request and transmits it to the position-related information providing service server 1 via the communication network 3 (step S11).

The modified-position-related information request transmitted from the privacy protection intervening device 4 has a format, as shown in Fig. 6B, which is the same as that of Fig. 6A. In this example, the user identification section 101 stores the user ID of the user #2, the position information section 102 stores the modified position information of Long. 135°20' 41"E and Lat. 35°30'22"N, and the request condition section 103 stores a condition indicative of requesting traffic information around here.

When having received the modified-position-related information request from the privacy protection intervening device 4 through the communication network 3 (step S4), the position-related information providing service server 1 extracts the position information (here, "Long.135°20'41"E and Lat.35°30'22"N") and the request condition (here, "traffic information around here") from the received request (step S5). The position-related information providing service server 1 uses the position information and the request condition to create position-related information and send it back to the user terminal 2 (step S6).

When having received the position-related information from the server 1 (step S7), the user terminal 2 displays the received information through the information output device 26 to present it to the user #2 (step S8).

### Third embodiment

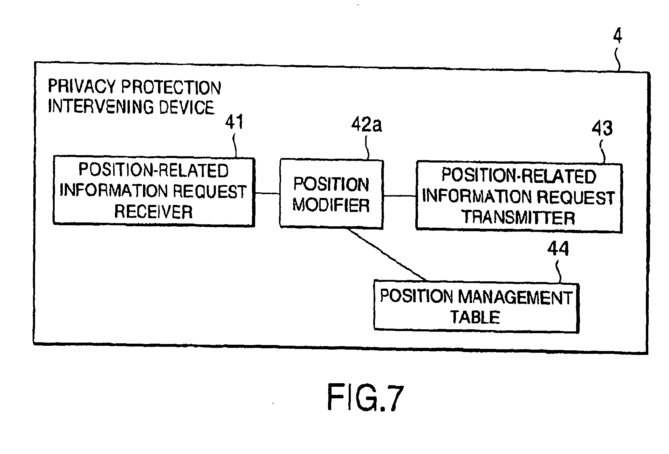

As shown in Fig. 7, in a privacy protection intervening device 4 according to a third embodiment of the present invention, a position management table 44 is added to the privacy protection intervening device 4 according to the second embodiment and an operation of a position modifier 42a is different from that of the second embodiment. Hereinafter, circuit blocks similar to those previously described with reference to Fig. 4 are denoted by the same reference numerals and the details will be omitted.

The position-related information request receiver 41 receives the position-related information request from the user terminal 2. The position modifier 42 extracts the position information and the user ID from the received position-related information request and registers them on the position management table 44.

Further, the position modifier 42 modifies the position information included in the received position-related information request by referring to the position management table 44 as described later. Then the position modifier 42 outputs a modified-position-related information request including the modified position information to the position-related information request transmitter 43. The position-related information request transmitter 43 transmits the modified-position-related information request to the position-related information providing service server 1 via the communication network 3.

### 1) Registration

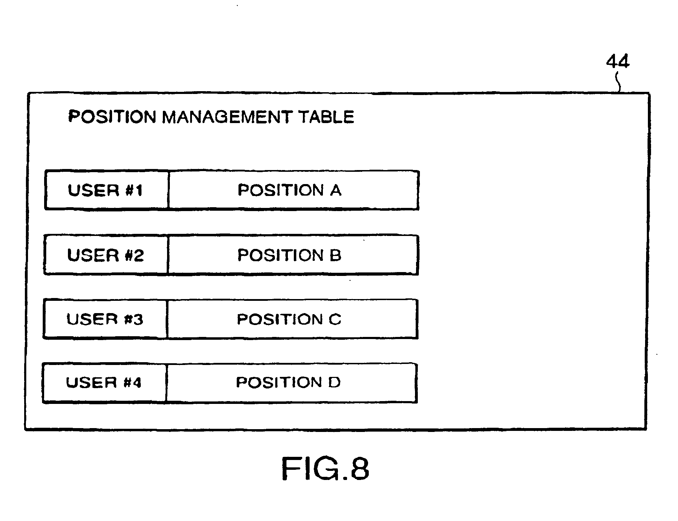

As shown in Fig. 8, the position management table 44 contains a plurality of entries, each of which consists of a pair of user ID and position of the user. In this example, positions A-D corresponding to respective ones of users #1-#4 and are registered in the position management table 44. By referring to this position management table 44, it is found that the user #1 is located at the position A, for example.

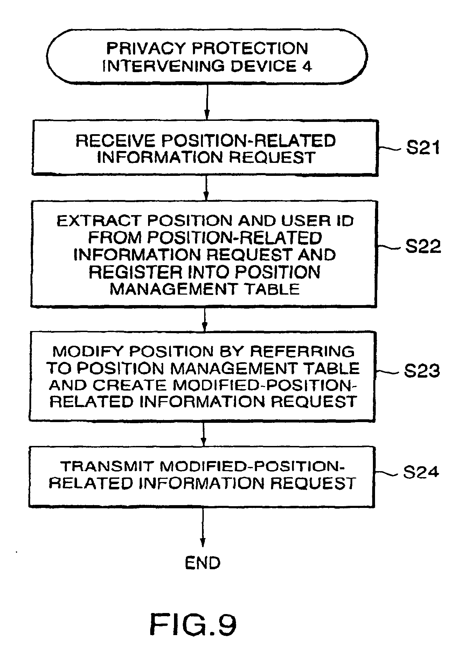

Referring to Fig. 9, the position-related information request receiver 41 receives the position-related information request from the user terminal 2 (step S21). The position modifier 42 extracts the position information and the user ID from the received position-related information request and registers them as an entry on the position management table 44 (step S22). Accordingly, when the users #1-#4 located at respective ones of positions A-D have transmitted position-related information requests, the position management table 44 stores the four entries as shown in Fig. 8.

### 2) New position-related information request

It is assumed that the position management table 44 stores four entries of users #1-#4 and positions A-D as shown in Fig. 8 and another user #5 located at a position E newly transmits a position-related information request to the privacy protection intervening device 4.

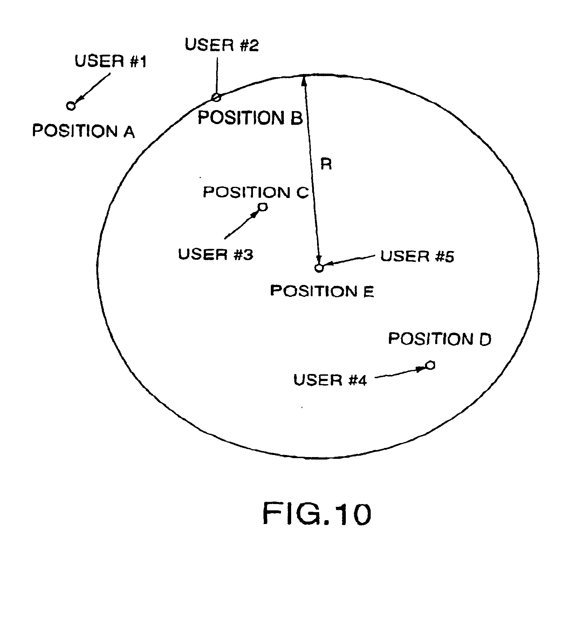

It is further assumed that, when the user #5 transmits the position-related information request, the respective users #1-#4 are located at the positions A-D as shown in Fig. 10.

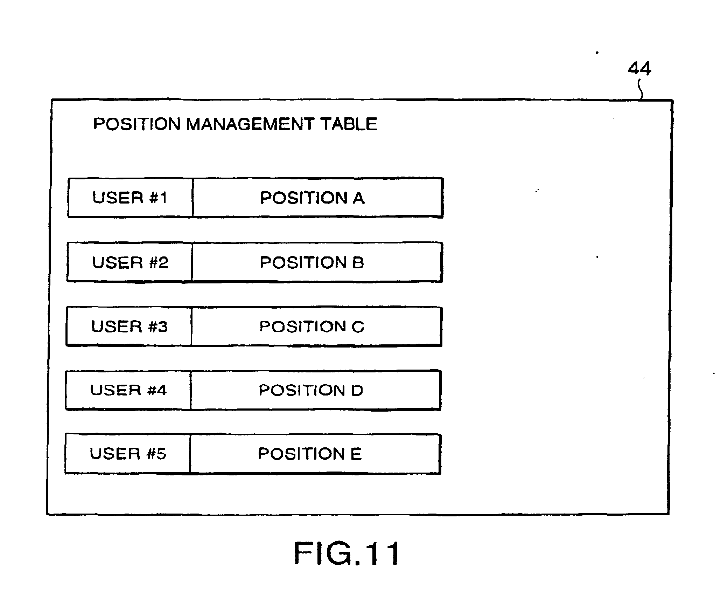

As described above, when the user #5 has transmitted the position-related information request, a new pair of user #5 and position E is registered on the position management table 44 as shown in Fig. 11.

Returning to Fig. 9, when receiving the position-related information request, the position modifier 42 searches the position management table 44 to modify the position information to another position information as described later, and thereafter the position modifier 42 creates a modified-position-related information request including the modified position information and outputs it to the position-related information request transmitter 43 (step S23). The position-related information request transmitter 43 transmits the modified-position-related information request to the position-related information providing service server 1 via the communication network 3 (step S24).

### 3) Position modification

Referring to Fig. 10, in the case where the new user #5 is located at the position E, the position E is modified to an arbitrary position within a predetermined radius R of the position E. In this example, the radius R is set to a distance from the position E to the position B of the user #2, which is the third nearest one. The radius R of the position E may be set to a distance to an arbitrary position registered in the position management table 44.

In this manner, the actual position E can be modified to a different position that is near the actual position E and a position of another user. Accordingly, even if a position-related information provider intends to identify a user requesting for the position-related information based on the position information included in the request, a plurality of users are found around the modified position, resulting in difficulty in identifying the target user and enhanced protection of privacy.

Further, according to the above position modification, the amount of position modification when the number of users per unit area is high is smaller than that when it is low. For example, in a mall where high numbers of users visit during the daytime and small numbers during the night, position information can be provided to users with high precision during the daytime and with low precision during the night. In other words, it is possible to select a desired precision of position information service depending on surrounding density of population.

The above operations of the privacy protection intervening device 4 as shown in Figs. 5 and 9 may be realized by software running on a program-controlled processor. More specifically, the privacy protection intervening device 4 is provided with a CPU, on which a control program runs to implement the position modifier 42 or 42a and the position management table 44.

## Claims

1. An information providing system for providing position-related information from an information providing server (1) to a mobile user terminal (2) through a network (3) to which a plurality of mobile user terminals are connected, wherein the network includes a wireless network and the position-related information relates to a position of the mobile user terminal, **characterized by**:
a position modifier (22, 42) for modifying a position indication of the mobile user terminal to produce a modified position indication,
wherein the modified position indication is transmitted as a position of the mobile user terminal to the information providing server.

2. The information providing system according to claim 1, wherein the mobile user terminal comprises the position modifier.

3. The information providing system according to claim 2, wherein the mobile user terminal further comprises:
a position detector (21) for detecting the position of the mobile user terminal; and
a transmitter (23) for transmitting a request having the modified position indication as a source position to the information providing server,
wherein the information providing server transmits the position-related information to the mobile user terminal in response to the request from the mobile user terminal.

4. The information providing system according to claim 1, further comprising:
an intervening device (4) connected to the network, for intervening in communication from the mobile user terminal to the information providing server,
wherein the intervening device comprises the position modifier.

5. The information providing system according to claim 1, further comprising:
an intervening device (4) connected to the network, for intervening in communication from the mobile user terminal to the information providing server,
wherein
the mobile user terminal (2) comprises:
a position detector (22) for detecting the position of the mobile user terminal; and
a first transmitter (23) for transmitting a first request having the position to the intervening device through the network, and
the intervening device (4) comprises:
a receiver (41) for receiving the first request from the mobile user terminal;
the position modifier (42) for modifying the position indication of the mobile user terminal included in the first request to produce the modified position indication; and
a second transmitter (43) for transmitting a second request having the modified position indication as a source position to the information providing server,
wherein the information providing server transmits the position-related information to the mobile user terminal in response to the second request received from the intervening device.

6. The information providing system according to any of claims 1-5, wherein the modified position indication is set to an arbitrary position within a predetermined radius of the position of the mobile user terminal.

7. The information providing system according to any of claims 1-5, wherein the modified position indication is set to an arbitrary position at a predetermined distance away from the position of the mobile user terminal.

8. The information providing system according to any of claims 1-5, wherein the position of the user terminal is represented by at least two values, wherein the modified position indication is represented by reducing the number of significant figures of each of said at least two values.

9. The information providing system according to claim 4 or 5, wherein the modified position indication is set to an arbitrary position within a radius of the position of the mobile user terminal,
wherein the radius is set to a distance from the position of the mobile user terminal to that of a selected other mobile user terminal.

10. The information providing system according to claim 9, wherein the intervening device further comprises:
a table for storing position information of the plurality of mobile user terminals,
wherein the position modifier modifies the position indication of the mobile user terminal by searching the table to select one of positions of the plurality of mobile user terminals.

11. An information providing method for providing position-related information from an information providing server to a mobile user terminal through a network to which a plurality of mobile user terminals are connected, wherein the network includes a wireless network and the position-related information relates to a position of the mobile user terminal, the method comprising the steps of:
a) detecting the position of the mobile user terminal;
**characterized by**
b) modifying an indication of the position of the mobile user terminal to produce a modified position indication; and
c) transmitting the modified position indication as a position of the mobile user terminal to the information providing server.

12. The information providing method according to claim 11, wherein at least the step b) is performed by the mobile user terminal.

13. The information providing method according to claim 12, wherein the step a) and c) are further performed by the mobile user terminal, the step c) comprising the steps of:
producing a request having the modified position indication as a source position; and
transmitting the request to the information providing server,
wherein the mobile user terminal receives the position-related information as a response to the request from the information providing server.

14. The information providing method according to claim 11, further comprising:
at an intervening device connected to the network,
intervening in communication from the mobile user terminal to the information providing server,
wherein the step b) is performed by the intervening device.

15. The information providing method according to claim 11, further comprising:
at the mobile user terminal,
transmitting a first request having the position to the intervening device through the network;
at an intervening device connected to the network,
receiving the first request from the mobile user terminal;
modifying the position indication of the mobile user terminal included in the first request to produce the modified position indication; and
transmitting a second request having the modified position indication as a source position to the information providing server,
wherein the information providing server transmits the position-related information to the mobile user terminal in response to the second request received from the intervening device.

16. The information providing method according to any of claims 11-15, wherein the modified position indication is set to an arbitrary position within a predetermined radius of the position of the mobile user terminal.

17. The information providing method according to any of claims 11-15, wherein the modified position indication is set to an arbitrary position at a predetermined distance away from the position of the mobile user terminal.

18. The information providing method according to any of claims 11-15, wherein the position of the mobile user terminal is represented by at least two values, wherein the modified position indication is represented by reducing the number of significant figures of each of said at least two values.

19. The information providing method according to claim 14 or 15, wherein the modified position indication is set to an arbitrary position within a radius of the position of the mobile user terminal, wherein the radius is set to a distance from the position of the mobile user terminal to that of a selected other mobile user terminal.

20. The information providing method according to claim 19, further comprising the steps of:
at the intervening device,
storing position information of the plurality of mobile user terminals in a table; and
searching the table to select one of positions of the plurality of mobile user terminals to modify the position indication of the mobile user terminal.

21. A mobile user terminal in an information providing system for providing position-related information from an information providing server to the mobile user terminal through a network to which a plurality of user terminals are connected, wherein the network includes a wireless network and the position-related information relates to a position of the mobile user terminal,
**characterized by**:
a position modifier for modifying a position indication of the mobile user terminal to produce a modified position indication,
wherein the modified position indication is transmitted as a position of the mobile user terminal to the information providing server.

22. The user terminal according to claim 21, further comprising:
a position detector for detecting the position of the mobile user terminal; and
a transmitter for transmitting a request having the modified position indication as a source position to the information providing server.

## Patentansprüche

1. Informationsbereitstellungssystem zum Bereitstellen von positionsbezogenen Informationen von einem Informationsbereitstellungsserver (1) für ein mobiles Anwenderendgerät (2) über ein Netz (3), an das mehrere mobile Anwenderendgeräte angeschlossen sind, wobei das Netz ein drahtloses Netz umfasst und die positionsbezogenen Informationen auf eine Position des mobilen Anwenderendgeräts bezogen sind, **gekennzeichnet durch**:
einen Positionsmodifizierer (22, 42) zum Modifizieren einer Positionsangabe des mobilen Anwenderendgeräts, um eine modifizierte Positionsangabe zu erzeugen,
wobei die modifizierte Positionsangabe als eine Position des mobilen Anwenderendgeräts an den Informationsbereitstellungsserver gesendet wird.

2. Informationsbereitstellungssystem nach Anspruch 1, bei dem das mobile Anwenderendgerät den Positionsmodifizierer umfasst.

3. Informationsbereitstellungssystem nach Anspruch 2, bei dem das mobile Anwenderendgerät ferner umfasst:
einen Positionsdetektor (21) zum Erfassen der Position des mobilen Anwenderendgeräts; und
einen Sender (23) zum Senden einer Anforderung, die die modifizierte Positionsangabe als eine Quellenposition besitzt, zum Informationsbereitstellungsserver,
wobei der Informationsbereitstellungsserver in Reaktion auf die Anforderung von dem mobilen Anwenderendgerät die positionsbezogenen Informationen an das mobile Anwenderendgerät sendet.

4. Informationsbereitstellungssystem nach Anspruch 1, das ferner umfasst:
eine Eingreifvorrichtung (4), die an das Netz angeschlossen ist, um in die Kommunikation von dem mobilen Anwenderendgerät zu dem Informationsbereitstellungsserver einzugreifen,
wobei die Eingreifvorrichtung den Positionsmodifizierer umfasst.

5. Informationsbereitstellungssystem nach Anspruch 1, das ferner umfasst:
eine Eingreifvorrichtung (4), die an das Netz angeschlossen ist, um in die Kommunikation von dem mobilen Anwenderendgerät zu dem Informationsbereitstellungsserver einzugreifen,
wobei das mobile Anwenderendgerät (2) umfasst:
einen Positionsdetektor (22) zum Erfassen der Position des mobilen Anwenderendgeräts; und
einen ersten Sender (23) zum Senden einer ersten Anforderung, die die Position besitzt, über das Netz zu der Eingreifvorrichtung,
wobei die Eingreifvorrichtung (4) umfasst:
einen Empfänger (41) zum Empfangen der ersten Anforderung von dem mobilen Anwenderendgerät;
den Positionsmodifizierer (42), der die Positionsangabe des mobilen Anwenderendgeräts, die in der ersten Anforderung enthalten ist, modifiziert, um die modifizierte Positionsangabe zu erzeugen; und
einen zweiten Sender (43), der eine zweite Anforderung, die die modifizierte Positionsangabe als eine Quellenposition besitzt, zu dem Informationsbereitstellungsserver sendet, und
wobei der Informationsbereitstellungsserver die positionsbezogenen Informationen in Reaktion auf die zweite Anforderung, die von der Eingreifvorrichtung empfangen wird, an das mobile Anwenderendgerät sendet.

6. Informationsbereitstellungssystem nach einem der Ansprüche 1-5, bei dem die modifizierte Positionsangabe auf eine beliebige Position in einem vorgegebenen Radius der Position des mobilen Anwenderendgeräts gesetzt wird.

7. Informationsbereitstellungssystem nach einem der Ansprüche 1-5, bei dem die modifizierte Positionsangabe auf eine beliebige Position in einem vorgegebenen Abstand von der Position des mobilen Anwenderendgeräts gesetzt wird.

8. informationsbereitstellungssystem nach einem der Ansprüche 1-5, bei dem die Position des Anwenderendgeräts durch wenigstens zwei Werte gegeben ist, wobei die modifizierte Positionsangabe durch Verringern der Anzahl signifikanter Ziffern jedes der wenigstens zwei Werte gegeben ist.

9. Informationsbereitstellungssystem nach Anspruch 4 oder 5, bei dem die modifizierte Positionsangabe auf eine beliebige Position innerhalb eines Radius der Position des mobilen Anwenderendgeräts gesetzt wird, wobei der Radius auf eine Strecke zwischen der Position des mobilen Anwenderendgeräts und jener eines ausgewählten anderen mobilen Anwenderendgeräts gesetzt wird.

10. Informationsbereitstellungssystem nach Anspruch 9, bei dem die Eingreifvorrichtung ferner umfasst:
eine Tabelle zum Speichern von Positionsinformationen der mehreren mobilen Anwenderendgeräte,
wobei der Positionsmodifizierer die Positionsangabe des mobilen Anwenderendgeräts durch Durchsuchen der Tabelle, um eine der Positionen der mehreren mobilen Anwenderendgeräte auszuwählen, modifiziert.

11. Informationsbereitstellungsverfahren zum Bereitstellen von positionsbezogenen Informationen von einem Informationsbereitstellungsserver für ein mobiles Anwenderendgerät über ein Netz, an das mehrere mobile Anwenderendgeräte angeschlossen sind, wobei das Netz ein drahtloses Netz umfasst und die positionsbezogenen Informationen auf eine Position des mobilen Anwenderendgeräts bezogen sind, wobei das Verfahren die folgenden Schritte umfasst:
a) Erfassen der Position des mobilen Anwenderendgeräts;
**gekennzeichnet durch**
b) Modifizieren einer Positionsangabe des mobilen Anwenderendgeräts, um eine modifizierte Positionsangabe zu erzeugen; und
c) Senden der modifizierten Positionsangabe als eine Position des mobilen Anwenderendgeräts zu dem Informationsbereitstellungsserver.

12. Informationsbereitstellungsverfahren nach Anspruch 11, bei dem wenigstens der Schritt b) von dem mobilen Anwenderendgerät ausgeführt wird.

13. Informationsbereitstellungsverfahren nach Anspruch 12, bei dem ferner der Schritt a) und der Schritt c) durch das mobile Anwenderendgerät ausgeführt werden, wobei der Schritt c) die folgenden Schritte umfasst:
Erzeugen einer Anforderung, die modifizierte Positionsangabe als eine Quellenposition besitzt; und
Senden der Anforderung zu dem Informationsbereitstellungsserver,
wobei das mobile Anwenderendgerät die positionsbezogenen Informationen n Reaktion auf die Anforderung von dem Informationsbereitstellungsserver empfängt.

14. Informationsbereitstellungsverfahren nach Anspruch 11, das ferner bei einer an das Netz angeschlossenen Eingreifvorrichtung umfasst:
Eingreifen in die Kommunikation von dem mobilen Anwenderendgerät zu dem Informationsbereitstellungsserver,
wobei der Schritt b) durch die Eingreifvorrichtung ausgeführt wird.

15. Informationsbereitstellungsverfahren nach Anspruch 11, das ferner umfasst:
bei dem mobilen Anwenderendgerät:
Senden einer ersten Anforderung, die die Position besitzt, über das Netz zu der Eingreifvorrichtung;
bei einer an das Netz angeschlossenen Eingreifvorrichtung:
Empfangen der ersten Anforderung von dem mobilen Anwenderendgerät;
Modifizieren der Positionsangabe des mobilen Anwenderendgeräts, die in der ersten Anforderung enthalten ist, um die modifizierte Positionsangabe zu erzeugen; und
Senden einer zweiten Anforderung, die die modifizierte Positionsangabe als eine Quellenposition besitzt, zu dem Informationsbereitstellungsserver,
wobei der Informationsbereitstellungsserver die positionsbezogenen Informationen in Reaktion auf die zweite Anforderung, die von der Eingreifvorrichtung empfangen wird, zu dem mobilen Anwenderendgerät sendet.

16. Informationsbereitstellungsverfahren nach einem der Ansprüche 11-15, bei dem die modifizierte Positionsangabe auf eine beliebige Position innerhalb eines vorgegebenen Radius der Position des mobilen Anwenderendgeräts gesetzt wird.

17. Informationsbereitstellungsverfahren nach einem der Ansprüche 11-15, bei dem die modifizierte Positionsangabe auf eine beliebige Position bei einem vorgegebenen Abstand von der Position des mobilen Anwenderendgeräts gesetzt wird.

18. Informationsbereitstellungsverfahren nach einem der Ansprüche 11-15, bei dem die Position des mobilen Anwenderendgeräts durch wenigstens zwei Werte gegeben ist, wobei die modifizierte Positionsangabe durch Verringern der Anzahl signifikanter Ziffern jedes der wenigstens zwei Werte gegeben ist.

19. Informationsbereitstellungsverfahren nach Anspruch 14 oder 15, bei dem die modifizierte Positionsangabe auf eine beliebige Position innerhalb eines Radius der Position des mobilen Anwenderendgeräts gesetzt wird, wobei der Radius auf eine Strecke zwischen der Position des mobilen Anwenderendgeräts und jener eines ausgewählten anderen mobilen Anwenderendgeräts gesetzt wird.

20. Informationsbereitstellungsverfahren nach Anspruch 19, das ferner bei der Eingreifvorrichtung die folgenden Schritte umfasst:
Speichern von Positionsinformationen der mehreren mobilen Anwenderendgeräte in einer Tabelle; und
Durchsuchen der Tabelle, um eine der Positionen der mehreren mobilen Anwenderendgeräte auszuwählen, um die Positionsangabe des mobilen Anwenderendgeräts zu modifizieren.

21. Mobiles Anwenderendgerät in einem Informationsbereitstellungssystem zum Bereitstellen von positionsbezogenen Informationen von einem Informationsbereitstellungsserver für ein mobiles Anwenderendgerät über ein Netz, an das mehreren Anwenderendgeräte angeschlossen sind, wobei das Netz ein drahtloses Netz umfasst und die positionsbezogenen Informationen auf eine Position des mobilen Anwenderendgeräts bezogen sind,
**gekennzeichnet durch**:
einen Positionsmodifizierer zum Modifizieren einer Positionsangabe des mobilen Anwenderendgeräts, um eine modifizierte Positionsangabe zu erzeugen,
wobei die modifizierte Positionsangabe als eine Position des mobilen Anwenderendgeräts zu dem Informationsbereitstellungsserver gesendet wird.

22. Anwenderendgerät nach Anspruch 21, das ferner umfasst:
einen Positionsdetektor zum Erfassen der Position des mobilen Anwenderendgeräts; und
einen Sender zum Senden einer Anforderung, die die modifizierte Positionsangabe als eine Quellenposition besitzt, zu dem Informationsbereitstellungsserver.

## Revendications

1. Système pour fournir des informations destiné à fournir des informations concernant la position provenant d'un serveur de fourniture d'informations (1) à un terminal mobile d'utilisateur (2) par l'intermédiaire d'un réseau (3) auquel une pluralité de terminaux mobiles d'utilisateurs sont connectés, dans lequel le réseau comprend un réseau sans fil et les informations concernant la position concernent une position du terminal mobile d'utilisateur, **caractérisé par** :
un modificateur de position (22, 42) pour modifier une indication de position du terminal mobile d'utilisateur afin de produire une indication de position modifiée,
dans laquelle l'indication de position modifiée est transmise comme position du terminal mobile d'utilisateur au serveur de fourniture d'informations.

2. Système de fourniture d'informations selon la revendication 1, dans lequel le terminal mobile d'utilisateur comprend le modificateur de position.

3. Système de fourniture d'informations selon la revendication 2, dans lequel le terminal mobile d'utilisateur comprend en outre :
un détecteur de position (21) pour détecter la position du terminal mobile d'utilisateur ; et
un émetteur (23) pour transmettre une demande ayant l'indication de position modifiée comme position de source au serveur de fourniture d'informations,
dans lequel le serveur de fournitures d'informations transmet les informations concernant la position au terminal mobile d'utilisateur en réponse à la demande provenant du terminal mobile d'utilisateur.

4. Système de fourniture d'informations selon la revendication 1, comprenant en outre :
un dispositif d'intervention (4) connecté au réseau, pour intervenir dans la communication provenant du terminal mobile d'utilisateur au serveur de fourniture d'informations,
dans lequel le dispositif d'intervention comprend le modificateur de position.

5. Système de fourniture d'informations selon la revendication 1, comprenant en outre :
un dispositif d'intervention (4) connecté au réseau, pour intervenir dans la communication provenant du terminal mobile d'utilisateur vers le serveur de fourniture d'informations,
dans lequel le terminal mobile d'utilisateur (2) comprend :
un détecteur de position (22) pour détecter la position du terminal mobile d'utilisateur ; et
un premier émetteur (23) pour transmettre une première demande ayant la position au dispositif d'intervention par l'intermédiaire du réseau, et
le dispositif d'intervention (4) comprend :
un récepteur (41) pour recevoir la première demande provenant du terminal mobile d'utilisateur ;
le modificateur de position (42) pour modifier l'indication de position du terminal mobile d'utilisateur comprise dans la première demande pour produire l'indication de position modifiée ; et
un deuxième émetteur (43) pour transmettre une deuxième demande ayant l'indication de position modifiée comme position de source vers le serveur de fourniture d'informations,
dans lequel le serveur de fourniture d'informations transmet les informations concernant la position au terminal mobile d'utilisateur en réponse à la deuxième demande reçue du dispositif d'intervention.

6. Système de fourniture d'informations selon l'une quelconque des revendications 1 à 5, dans lequel l'indication de position modifiée est établie à une position arbitraire dans un rayon prédéterminé de la position du terminal mobile d'utilisateur.

7. Système de fourniture d'informations selon l'une quelconque des revendications 1 à 5, dans lequel l'indication de position modifiée est établie à une position arbitraire à une distance prédéterminé de la position du terminal mobile d'utilisateur.

8. Système de fourniture d'informations selon l'une quelconque des revendications 1 à 5, dans lequel la position du terminal d'utilisateur est représentée par au moins deux valeurs, dans lequel l'indication de position modifiée est représentée en réduisant le nombre de chiffres importants de chacune desdites au moins deux valeurs.

9. Système de fourniture d'informations selon la revendication 4 ou 5, dans lequel l'indication de position modifiée est établie à une position arbitraire dans laquelle un rayon de la position du terminal mobile d'utilisateur, dans lequel le rayon est établi à une certaine distance de la position du terminal mobile d'utilisateur par rapport à celle d'un autre terminal mobile d'utilisateur sélectionné.

10. Système de fourniture d'informations selon la revendication 9, dans lequel le dispositif d'intervention comprend en outre :
un tableau pour enregistrer les informations de position de la pluralité de terminaux mobiles d'utilisateurs,
dans lequel le modificateur de position modifie l'indication de position du terminal mobile d'utilisateur en recherchant le tableau pour sélectionner une des positions de la pluralité de terminaux mobiles d'utilisateurs.

11. Procédé de fourniture d'informations pour fournir des informations concernant la position à partir d'un serveur de fourniture d'informations à un terminal mobile d'utilisateur par l'intermédiaire d'un réseau auquel une pluralité de terminaux mobiles d'utilisateurs sont connectés, dans lequel le réseau comprend un réseau sans fil et les informations concernant la position concernent une position du terminal mobile d'utilisateur, le procédé comprenant les étapes de :
a) détection de la position du terminal mobile d'utilisateur ; **caractérisée par**
b) la modification d'une indication de la position du terminal mobile d'utilisateur pour produire une indication de position modifiée ; et
c) transmission de l'indication de position modifiée comme position du terminal mobile d'utilisateur au serveur de fourniture d'informations.

12. Procédé de fourniture d'informations selon la revendication 11, dans lequel au moins l'étape b) est réalisée par le terminal mobile d'utilisateur.

13. Procédé de fourniture d'informations selon la revendication 12, dans lequel l'étape a) et c) sont encore réalisées par le terminal mobile d'utilisateur, l'étape c) comprenant les étapes de :
production d'une demande ayant l'indication de position modifiée comme position de source ; et
transmission de la demande au serveur de fourniture d'informations,
dans lequel le terminal mobile d'utilisateur reçoit les informations concernant la position comme réponse à la demande provenant du serveur de fourniture d'informations.

14. Procédé de fourniture d'informations selon la revendication 11, comprenant en outre :
sur un dispositif d'intervention connecté au réseau,
une intervention dans la communication depuis le terminal mobile d'utilisateur vers le serveur de fourniture d'informations,
dans lequel l'étape b) est réalisée par le dispositif d'intervention.

15. Procédé de fourniture d'informations selon la revendication 11, comprenant en outre :
sur le terminal mobile d'utilisateur,
la transmission d'une première demande ayant la position vers le dispositif d'intervention par l'intermédiaire du réseau ;
sur un dispositif d'intervention connecté au réseau, la réception de la première demande depuis le terminal mobile d'utilisateur ;
la modification de l'indication de position du terminal mobile d'utilisateur comprise dans la première demande pour produire l'indication de position modifiée ; et
la transmission d'une deuxième demande ayant l'indication de position modifiée comme position de source vers le serveur de fourniture d'informations,
dans lequel le serveur de fourniture d'informations transmet les informations concernant la position au terminal mobile d'utilisateur en réponse à la deuxième demande reçue du dispositif d'intervention.

16. Procédé de fourniture d'informations selon l'une quelconque des revendications 11 à 15, dans lequel l'indication de position modifiée est établie à une position arbitraire dans un rayon prédéterminé de la position du terminal mobile d'utilisateur.

17. Procédé de fourniture d'informations selon l'une quelconque des revendications 11 à 15, dans lequel l'indication de position modifiée est établie à une position arbitraire à une distance prédéterminée de la position du terminal mobile d'utilisateur.

18. Procédé de fourniture d'informations selon l'une quelconque des revendications 11 à 15, dans lequel la position du terminal mobile d'utilisateur est représentée par au moins deux valeurs, dans lequel l'indication de position modifiée est représentée par la réduction du nombre de chiffres importants de chacune desdites au moins deux valeurs.

19. Procédé de fourniture d'informations selon la revendication 14 ou 15, dans lequel l'indication de position modifiée est établie à une position arbitraire dans un rayon de la position du terminal mobile d'utilisateur, dans lequel le rayon est établi à une certaine distance de la position du terminal mobile d'utilisateur par rapport à celle d'un terminal mobile d'utilisateur sélectionné.

20. Procédé de fourniture d'informations selon la revendication 19, comprenant en outre les étapes :
au niveau du dispositif d'intervention,
d'enregistrement des informations de position de la pluralité de terminaux mobiles d'utilisateurs dans un tableau ; et
de recherche du tableau pour sélectionner l'une des positions de la pluralité de terminaux mobiles d'utilisateurs pour modifier l'indication de position du terminal mobile d'utilisateur.

21. Terminal mobile d'utilisateur dans un système de fourniture d'informations pour fournir des informations concernant la position à partir d'un serveur fournissant des informations au terminal mobile d'utilisateur par l'intermédiaire d'un réseau auquel une pluralité de terminaux d'utilisateur sont connectés, dans lequel le réseau comprend un réseau sans fil et les informations concernant la position concernent une position du terminal mobile d'utilisateur, **caractérisé par** :
un dispositif de modification de position pour modifier une indication de position du terminal mobile d'utilisateur pour produire une indication de position modifiée,
dans lequel l'indication de position modifiée est transmise comme position du terminal mobile d'utilisateur au serveur de fourniture d'informations.

22. Terminal d'utilisateur selon la revendication 21, comprenant en outre :
un détecteur de position pour détecter la position du terminal mobile d'utilisateur ; et
un émetteur pour transmettre une demande ayant l'indication de position modifiée comme position de source au serveur de fourniture d'informations.
